# EUROPEAN PATENT SPECIFICATION

(11) **EP 3 476 531 B1**
(45) Date of publication and mention of the grant of the patent: **23.02.2022**
(21) Application number: 18196809.0
(22) Date of filing: 26.09.2018
(51) Int. Cl.: B23Q 3/08, B25B 11/00

(54) **MACHINE TOOL WITH AN IMPROVED SYSTEM FOR STOPPING WORKPIECES TO BE MACHINED**
WERKZEUGMASCHINE MIT EINEM VERBESSERTEN SYSTEM ZUM HALTEN VON ZU BEARBEITENDEN WERKSTÜCKEN
MACHINE-OUTIL AVEC SYSTEME AMELIORE POUR ARRETER LES PIECES A USINER

(30) Priority: 31.10.2017 IT 201700123747
(43) Date of publication of application: 01.05.2019
(73) Proprietor: SCM Group S.p.A., 47921 Rimini (RN) (IT)
(72) Inventor: FERRI, Mirko, 47921 Rimini (IT)
(74) Representative: Santi, Filippo

(56) References cited:
- DE-A1-102013 113 112
- US-A- 5 048 804

## Description

This invention relates to a machine tool with an improved system for stopping workpieces to be machined.

More in detail, the invention relates to a machine tool with a system for stopping workpieces to be machined, such as, for example, wooden panels, to the work surface of the machine tool.

The description below relates to a machine tool for machining wooden panels equipped with a stopping system according to the invention, but it is quite apparent how the same should not be considered limited to this specific use, as the relative field of application may also be extended to machine tools for machining workpieces of different type and/or shape.

Normally, the work surfaces with which the machine tools for machining wooden panels are provided are supported by the support structure of the machine tool itself and consist of a metal support surface in which a multitude of vertical through holes is made for the passage of air, each provided with a respective valve which can be opened and closed manually using a screwdriver.

Grooves, which are normally made in the form of a grid, are formed on the above-mentioned metal support surface, in such a way that the vertical through holes are positioned between the various grooves.

The grooves allow the positioning of linear seals inside them, for forming, in this way, on the upper part of the support surface, one or more independent areas, that is, compartments, in each of which leads one or more vertical through holes.

A support panel, on which the panel to be machined is rested, is normally rested on the support surface.

The above-mentioned support panel normally consists of a breathable material (e.g. cork), so that it can be passed through by a flow of air.

The above-mentioned through holes are also connected to a vacuum pump for creating a vacuum condition below the panels to be machined when the valves of said holes are in the open position, in such a way that both the panels to be machined and the support panel are attracted, strongly and stably, towards the support surface until they are completely stopped.

More specifically, when the vacuum pump is operated, a negative pressure is created in the compartments defined by the above-mentioned seals in which holes lead with the respective valve open, so that these compartments become, in fact, stopping areas for the overlying portions of the panel to be machined.

The division of the top area of the support into sub-areas, that is to say, into independent compartments, is necessary in order to allow the stopping of the pieces obtained after cutting the panels.

As mentioned above with reference to the traditional machine tools, in order to open and close the valves associated with the through holes made in the work surface, it is necessary to intervene on them manually, if necessary with the use of a screwdriver or other tool or instrument.

For this reason, if, after the variation of the programme for cutting the panels, it is necessary to modify the configuration or the distribution of the active compartments, that is to say, of the compartments with negative pressure, it is inevitably necessary to proceed, preliminarily, with the removal of the support panel positioned above the support surface so as to then be able to intervene on the valves from above turning, in one direction or the other, the screws of the opening and closing mechanism of the valves.

As can easily be inferred, each variation of the cutting programme planned on the traditional machine tools of this type results in the execution of a rather laborious process and above all time-consuming for the relative implementation.

A known technical solution is disclosed in the U.S. patent No. US 5048804.

In light of the above, the aim of the invention is therefore to provide a machine tool with a system for stopping workpieces to be machined which allows a high productivity level to be achieved.

Another aim of the invention is to provide a machine tool with a system for stopping workpieces to be machined which allows efficient fixing of the workpieces to the work surface and also of any pieces resulting from the cutting operation.

A further aim of the invention is to provide a machine tool with a system for stopping workpieces to be machined which allows the stopping conditions of the workpieces to be varied automatically.

The aim of the invention is to provide a machine tool with a system for stopping workpieces to be machined which has a reduced structural complexity.

The specific object of this invention is therefore a machine tool comprising a system for stopping workpieces to be machined, said system comprising: a support which is substantially flat for supporting at least one workpiece to be machined, in said support there being formed at least one opening, beneath which there is at least one chamber; a system for generating a negative pressure connected to said at least one chamber for generating a negative pressure in said at least one chamber; at least one shutter positioned beneath said at least one opening, said at least one shutter being movable between a raised position, in which said at least one shutter closes said at least one opening and prevents, in use, said negative pressure in said at least one chamber from passing through said at least one opening, and a lowered position, in which said at least one opening is left at least partially open by said at least one shutter and said negative pressure propagates, in use, from said at least one chamber to said at least one opening; and a control system connected to said at least one shutter, for controlling the movement of said at least one shutter between said raised position and said lowered position, in such a way that when said at least one workpiece to be machined is positioned, in use, above said support and said control system commands said at least one shutter to position itself in said lowered position, said at least one workpiece to be machined stops due to the effect of the attraction exerted by said negative pressure on said at least one workpiece to be machined towards said support.

Further, according to the invention, said control system can be automatic or semiautomatic.

Preferably, according to the invention, said at least one chamber is in communication with at least two openings.

Advantageously, according to the invention, said at least one shutter can comprise a cylinder and a piston movable relative to said cylinder.

Further, according to the invention, said piston may be movable in a direction substantially at right angles to said support.

Further, according to the invention, said at least one shutter can comprise elastic means positioned between said piston and said cylinder.

Preferably, according to the invention, said at least one shutter comprises at least one seal element positioned in an area substantially at the top of the piston to allow said at least one shutter to form a seal with said at least one opening when said at least one shutter is in said raised position.

Further, according to the invention, said system for stopping workpieces to be machined may comprise at least one electromagnet associated with said at least one shutter, wherein said at least one electromagnet is connected to said control system and is configured for positioning said at least one shutter in said raised position when it receives a signal from said control system, and for positioning said at least one shutter in said lowered position when it receives a further signal from said control signal.

Alternatively, according to the invention, said at least one shutter can be configured for being actuated pneumatically.

Again according to the invention, said machine tool may comprise: a compressed air system for generating at least a flow of compressed air directed towards said at least one shutter, said compressed air system being connected to said at least one shutter; and at least one valve operatively positioned between said at least one shutter and said compressed air system, for interrupting selectively, in use, at least a flow of compressed air directed from said compressed air system towards said at least one shutter.

The invention is now described, by way of example and without limiting the scope of the invention, with reference to the accompanying drawings which illustrate preferred embodiments of it, in which:
Figure 1 is a partial perspective view of a machine tool comprising a system for stopping workpieces to be machined according to the invention;
Figure 2 is a side view of the machine tool shown in Figure 1;
Figure 3 is a top plan view of the machine tool shown in Figure 1;
Figure 4 is a detailed view of detail "C" shown in Figure 3;
Figure 5 is a cross section view of a movable component of the system for stopping workpieces to be machined according to a first embodiment of the invention, in a lowered opening position of the relative hole;
Figure 6 is a cross section view of the component shown in Figure 5, in a raised closing position of the relative hole;

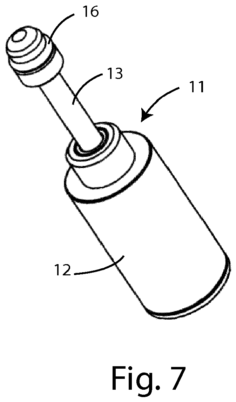

Figure 7 is a perspective view of the component shown in Figures 5 and 6;
Figure 8 is a cross section view of a movable component of the system for stopping workpieces to be machined according to a second embodiment of the invention, in a lowered opening position of the relative hole; and
Figure 9 is a cross section view of the component shown in Figure 8, in a raised closing position of the relative hole.

In the various figures similar parts are labelled with the same reference numerals.

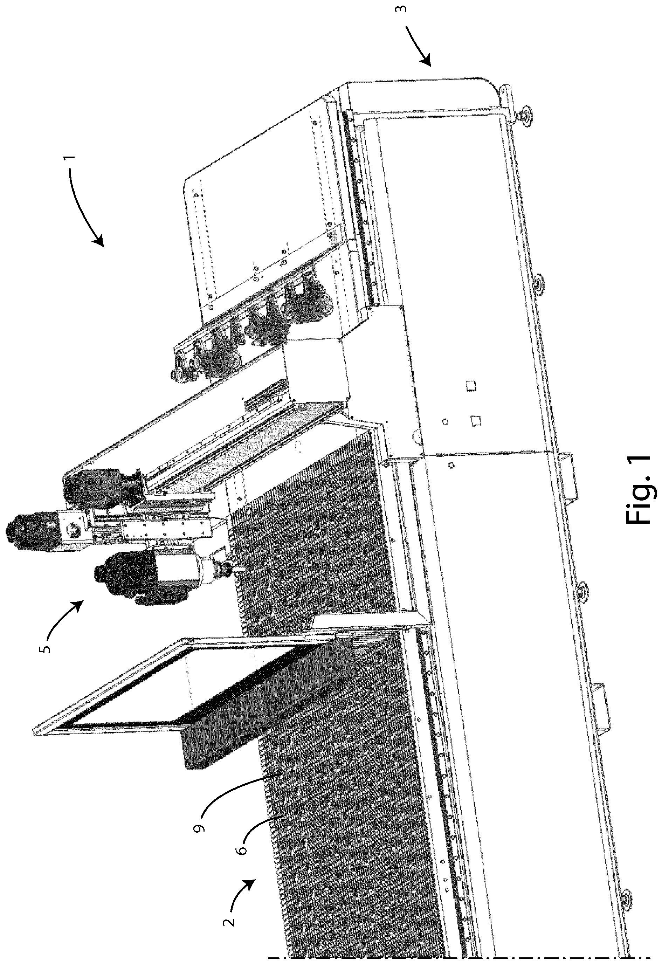

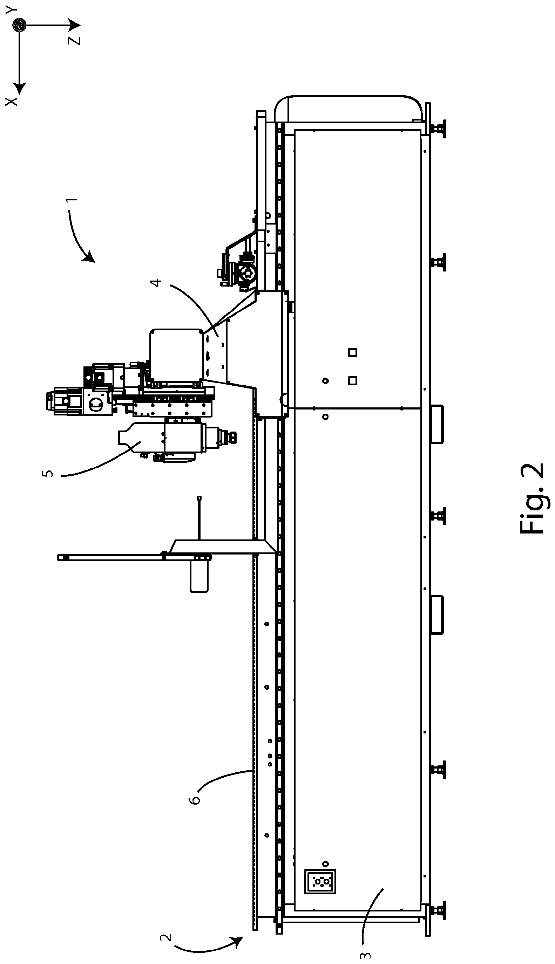

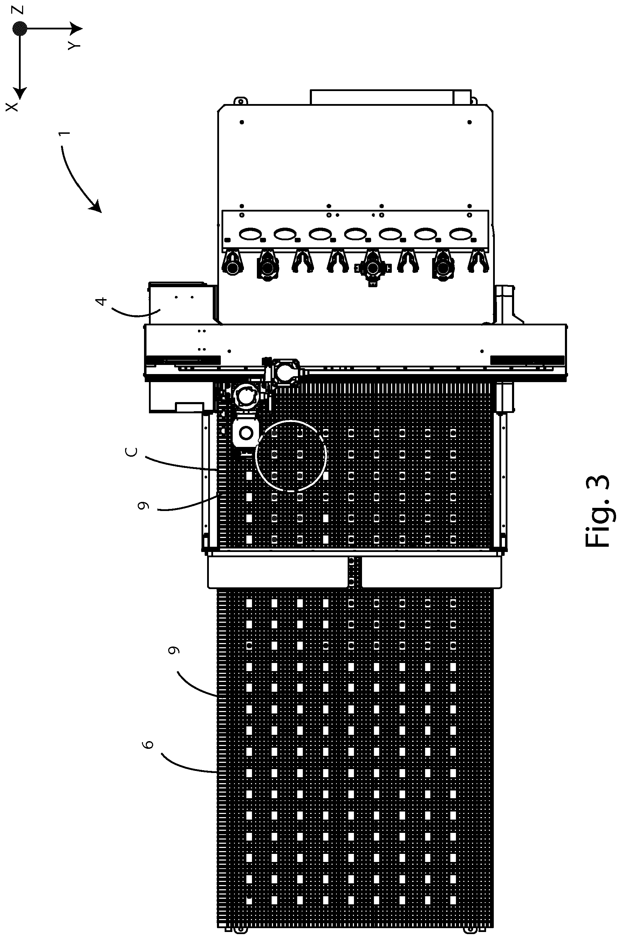

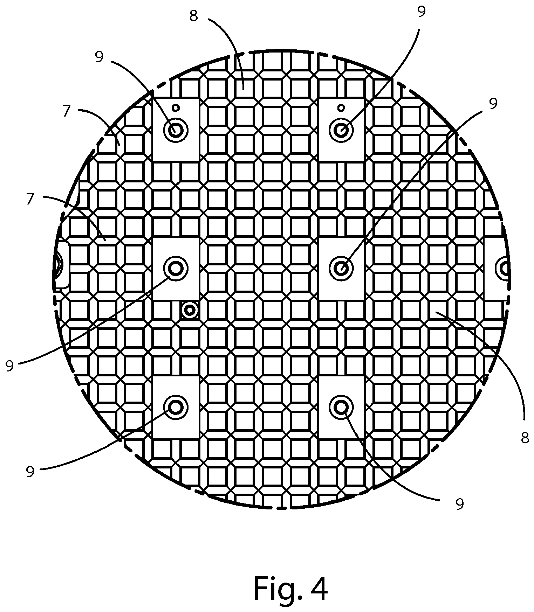

With specific reference to the Figures 1-6, the numeral 1 denotes a machine tool for machining wooden panels.

The machine tool 1 comprises a work surface 2 supported by a base 3.

Above the work surface 2 there is, in a transversal position with respect to the latter, a gantry 4 movable along the axis X, on which is enabled to move, along the axes Y and Z, an operating head 5 for machining panels.

The work surface 2 comprises in turn a metal support 6, preferably made of aluminium, with a substantially flat shape, on which to rest the panels to be machined.

On the upper face of the support 6 there is a plurality of grooves 7 positioned in the form of a grid, so as to form a plurality of raised areas 8 uniformly distributed and separated from each other by the grooves 7.

The above-mentioned support 6 may be, for example, formed by a metal sheet in turn consisting, if necessary, of a series of longitudinal elements alongside each other and joined together.

A plurality of vertical through holes 9 is also formed in the support 6, which are uniformly distributed over the entire surface of the support 6.

Directly beneath the through holes 9 are formed one or more vacuum chamber 10 communicating with the outside only through the above-mentioned through holes 9 and connected, in turn, with a system for generating negative pressure, for example a vacuum pump.

Beneath each through hole 9 there is also a valve, that is to say a shutter 11, which can be activated electrically.

More specifically, the shutter 10 comprises a cylinder 12 and a piston 13 movable vertically inside said one or more vacuum chambers 10 in such a way as to open or close, from below, the relative through hole 9.

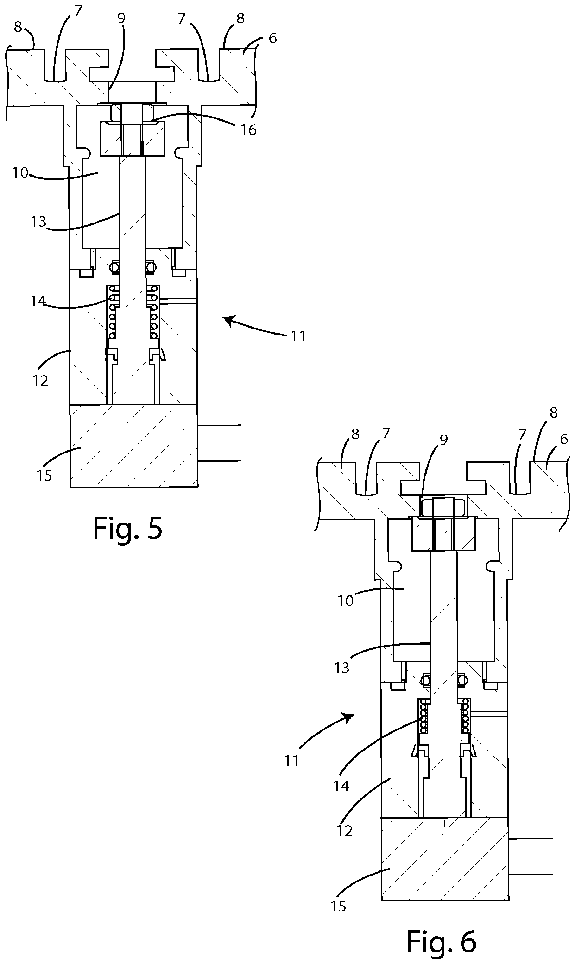

A compression spring 14 is interposed between the cylinder 12 and the piston 13, operating in such a way as to push the piston 13 towards the relative lowered opening position of the through hole 9 (shown in Figure 5).

Beneath each shutter 10 there is also an electromagnet 15 connected to a control system, which is either automatic or semiautomatic, designed to control the operation of each electromagnet 15.

More specifically, the electromagnet 15 is configured in such a way that when it receives a predetermined signal from the above-mentioned control system, it pushes the piston 13 upwards, moving it and retaining it, until it receives a new signal, in the closing position of the through hole 9 positioned above it, overcoming the opposition exerted by the compression spring 14 in the shutter 10 and in this way preventing the propagation of the vacuum from said one or more vacuum chambers 10 to said through hole 9 (see Figure 6).

If, on the other hand, the control system sends a new signal to the electromagnet 15, the latter will, in turn, lower the piston 13, with consequent opening of the relative through hole 9 and at the same time propagation of any vacuum present in said one or more vacuum chambers 10 towards the through hole 9 (see Figure 5); also in this case, the piston 13 will remain in the lowered position until receiving any new signal by the electromagnet 15.

In the upper part of the piston 13 there is also a seal 16 to guarantee the seal with the through hole 9 when the piston 13 is in the raised closing position (see Figure 6).

In order to stop the panels to be machined on the work surface 2 it is necessary, firstly, to position one or more seals (not illustrated) in the grooves 7 of the support 6 about one or more through holes 9, so that one or more isolated areas are defined on the upper face of the support 6, delimited on the perimeter by the above-mentioned seals, on the basis of the selected work programme of the machine tool 1.

Subsequently, it is necessary to position on the support 6, in sequence, a support panel (not illustrated) and one or more panels to be machined (not illustrated), in such a way that said support panel is positioned between the latter and the support 6 and that a plurality of upper chambers is formed in the areas delimited by the above-mentioned seals.

After carrying out these preliminary operations, it is possible to activate the above-mentioned vacuum generation system which, once it operates, will generate a vacuum condition, that is, a negative pressure, in the above-mentioned one or more vacuum chambers 10.

At this point, by using the above-mentioned system for controlling the machine tool 1, the piston 13 of one or more shutters 10 is lowered, thereby allowing the opening of the relative through holes 9 and, consequently, the propagation of the vacuum from said one or more vacuum chambers 10 to the upper chambers defined by the seals into which the open through holes lead 9.

In this way, the regions of the panel to be machined located above the upper chambers in which the vacuum is present, that is, with a negative pressure, will be attracted strongly and stably towards the underlying support 6 until the relative stopping.

If, on the other hand, the distribution of the active areas for stopping the panels to be machined is to be modified, for work reasons, that is to say, the upper chambers with a negative pressure, it will be sufficient to open or close one or more through holes 9 using the control system of the machine tool 1.

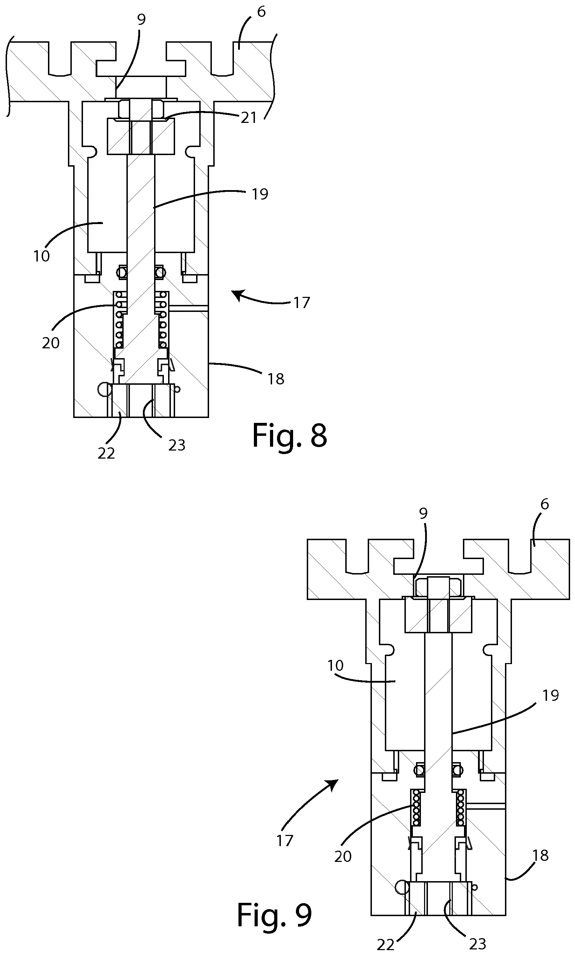

Figures 8 and 9, on the other hand, show a shutter 17 of the pneumatic type, also designed to be used for the same application described above with reference to shutter 10.

The shutter 17 is also designed to be positioned beneath a respective through hole 9 and comprises a cylinder 18 and a piston 19 movable inside the cylinder 18 in such a way as to open or close from below the above-mentioned through hole 9.

Also in this case, a compression spring 20 is interposed between the cylinder 18 and the piston 19, operating in such a way as to push the piston 19 towards the relative lowered position, in which the through hole 9 remains open (shown in Figure 8).

On the upper part of the shutter 17 there is also a seal 21 to guarantee the seal when the piston 19 is in its maximum raised position obstructing the through hole 9 from below (see Figure 9).

In the lower part of the shutter 17 there is a connector 22 in which is defined an axial passage 23 communicating with the outside and with the bottom of the piston 19.

The connector 22 is also connected to a compressed air system (not illustrated).

On the connection line between the above-mentioned compressed air system and the connector 22 there is a solenoid valve (not illustrated), controlled by a control system, for selectively interrupting the passage of compressed air towards the connector 22.

More specifically, when the solenoid valve is in a position such as to allow the passage of compressed air, the piston 19 is pushed upwards by the flow of compressed air until closing the relative through hole 9 (see Figure 9), thereby preventing any vacuum present in said one or more vacuum chambers 10 from reaching the through hole 9.

When, on the other hand, the solenoid valve such as to interrupt the passage of compressed air, the piston 19 remains in its lowered position (shown in Figure 8) under the constant thrust of the compression spring 20, allowing any vacuum present in said one or more vacuum chambers 10 to reach the through hole 9.

As may be inferred from the above description, the proposed system for stopping workpieces to be machined allows the modification, advantageously, of the distribution of the active areas of the work surface, that is, the areas for stopping panels to be machined, in a fast and easy manner, without having to remove the panels and the support panel.

This invention is described by way of example only, without limiting the scope of application, according to its preferred embodiments, but it shall be understood that the invention may be modified and/or adapted by experts in the field without thereby departing from the scope of the inventive concept, as defined in the claims herein.

## Claims

1. Machine tool (1) comprising a system for stopping workpieces to be machined, said system comprising:
a support (6), which is substantially flat, for supporting at least one workpiece to be machined, at least one opening (9) being formed in said support (6), at least one chamber (10) being provided under the at least one opening (9);
a depression generation system which is connected with said at least one chamber (10) to generate a depression in said at least one chamber (10);
at least one valve element (11, 17) which is placed under said at least one opening (9), said at least one valve element (11, 17) being movable between an upper position, where said at least one valve element (11, 17) closes said at least one opening (9) and prevents, in use, said depression in said at least one chamber (10) from going through said at least one opening (9), and a lower position, where said at least one opening (9) is kept at least partially open by said at least one valve element (11, 17) and said depression propagates, in use, from said at least one chamber (10) to said at least one opening (9); and
a control system, which is connected with said at least one valve element (11, 17), to control movement of said at least one valve element (11, 17) between said upper position and said lower position, such that said at least one workpiece to be machined stops due to the attraction exerted by said depression on said at least one workpiece to be machined towards said support (6) when said at least one workpiece to be machined is placed, in use, above said support (6) and said control system commands said at least one valve element (11, 17) to place in said lower position.

2. Machine tool (1) according to claim 1, **characterized in that** said control system is automatic or semi-automatic.

3. Machine tool (1) according to claim 1 or 2, **characterized in that** said at least one chamber (10) is in communication with at least two openings (9).

4. Machine tool (1) according to any one of the preceding claims, **characterized in that** said at least one valve element (11, 17) comprises a cylinder and a piston (13, 19) which is movable relative to said cylinder (12, 18).

5. Machine tool (1) according to claim 4, **characterized in that** said piston (13, 19) is movable according to a direction which is substantially orthogonal to said support (6).

6. Machine tool (1) according to claim 4 or 5, **characterized in that** said at least one valve element (11, 17) comprises elastic means (14, 20) which are placed between said piston (13, 19) and said cylinder (12, 18).

7. Machine tool (1) according to any one of the claims 4 to 6, **characterized in that** said at least one valve element (11, 17) comprises at least one sealing element (16, 21) which is placed in a substantially top region of said piston (13, 19) to allow said at least one valve element (11, 17) to provide a seal with said at least one opening (9) when said at least one valve element (11, 17) is in said upper position.

8. Machine tool (1) according to any one of the preceding claims, **characterized in that** said system for stopping workpieces to be machined comprises at least one electromagnet (15) associated with said at least one valve element (11), wherein said at least one electromagnet (15) is connected with said control system and is configured to place said at least one valve element (11) in said upper position when the at least one electromagnet (15) receives a signal from said control system, and to place said at least one valve element (11) in said lower position when the at least one electromagnet (15) receives a further signal from said control system.

9. Machine tool (1) according to any one of claims 1 to 7, **characterized in that** said at least one valve element (17) is configured to be pneumatically operated.

10. Machine tool (1) according to claim 9, **characterized in that** it comprises:
a compressed air system to provide at least one compressed air flow directed to said at least one valve element (17), said compressed air system being connected with said at least one valve element (17); and
at least one valve operatively placed between said at least one valve element (17) and said compressed air system to selectively interrupt, when in use, at least one compressed air flow which is directed from said compressed air system to said at least one valve element (17).

## Patentansprüche

1. Werkzeugmaschine (1), umfassend ein System zum Festhalten zu bearbeitender Werkstücke, wobei das System umfasst:
eine Auflage (6), die im Wesentlichen flach ist, zum Auflegen von zumindest einem zu bearbeitenden Werkstück, wobei in dieser Auflage (6) zumindest eine Öffnung (9) ausgebildet ist, wobei zumindest eine Kammer (10) unter der zumindest einen Öffnung (9) vorgesehen ist; ein Unterdruckerzeugungssystem, das mit der zumindest einen Kammer (10) verbunden ist, um einen Unterdruck in der zumindest einen Kammer (10) zu erzeugen;
zumindest ein Ventilelement (11, 17), das unter der zumindest einen Öffnung (9) angeordnet ist, wobei das zumindest eine Ventilelement (11, 17) beweglich ist zwischen einer oberen Position, in der das zumindest eine Ventilelement (11, 17) die zumindest eine Öffnung (9) verschließt und, beim Gebrauch, verhindert, dass der in der zumindest einen Kammer (10) vorhandene Unterdruck durch die zumindest eine Öffnung (9) dringen kann, und einer unteren Position, in der die zumindest eine Öffnung (9) zumindest teilweise von dem zumindest einen Ventilelement (11, 17) offen gehalten wird und der Unterdruck, beim Gebrauch, von der zumindest einen Kammer (10) zu der zumindest einen Öffnung (9) ausströmen kann; und
ein Steuersystem, das mit dem zumindest einen Ventilelement (11, 17) verbunden ist, zur Steuerung der Bewegung des zumindest einen Ventilelements (11, 17) zwischen der oberen Position und der unteren Position, so dass das zumindest eine zu bearbeitende Werkstück durch die Anziehungskraft festgehalten wird, die der Unterdruck auf das zumindest eine zu bearbeitende Werkstück in Richtung der Auflage (6) ausübt, wenn das zumindest eine zu bearbeitende Werkstück, beim Gebrauch, auf der Auflage (6) abgelegt wird und das Steuersystem das zumindest eine Ventilelement (11, 17) ansteuert, damit es die untere Position einnimmt.

2. Werkzeugmaschine (1) nach Anspruch 1, **dadurch gekennzeichnet, dass** das Steuersystem automatisch oder halbautomatisch ist.

3. Werkzeugmaschine (1) nach Anspruch 1 oder 2, **dadurch gekennzeichnet, dass** die zumindest eine Kammer (10) in Verbindung mit zumindest zwei Öffnungen (9) ist.

4. 5Werkzeugmaschine (1) nach einem der vorhergehenden Ansprüche, **dadurch gekennzeichnet, dass** das zumindest eine Ventilelement (11, 17) einen Zylinder und einen Kolben (13, 19) umfasst, der relativ zu dem Zylinder (12, 18) beweglich ist.

5. Werkzeugmaschine (1) nach Anspruch 4, **dadurch gekennzeichnet, dass** der Kolben (13, 19) entlang einer Richtung beweglich ist, die im Wesentlichen orthogonal zu der Auflage (6) ist.

6. Werkzeugmaschine (1) nach Anspruch 4 oder 5, **dadurch gekennzeichnet, dass** das zumindest eine Ventilelement (11, 17) elastische Mittel (14, 20) umfasst, die zwischen dem Kolben (13, 19) und dem Zylinder (12, 18) angeordnet sind.

7. Werkzeugmaschine (1) nach einem der Ansprüche von 4 bis 6, **dadurch gekennzeichnet, dass** das zumindest eine Ventilelement (11, 17) zumindest ein Dichtungselement (16, 21) umfasst, das in einem im Wesentlichen oberen Bereich des Kolbens (13, 19) angeordnet ist, um es dem zumindest einen Ventilelement (11, 17) zu ermöglichen, eine Abdichtung gegenüber der zumindest einen Öffnung (9) bereitzustellen, wenn sich das zumindest eine Ventilelement (11, 17) in der oberen Position befindet.

8. Werkzeugmaschine (1) nach einem der vorhergehenden Ansprüche, **dadurch gekennzeichnet, dass** das System zum Festhalten zu bearbeitender Werkstücke zumindest einen Elektromagneten (15) umfasst, der mit dem zumindest einen Ventilelement (11) verbunden ist, wobei der zumindest eine Elektromagnet (15) mit dem Steuersystem verbunden und dafür konfiguriert ist, das zumindest eine Ventilelement (11) in der oberen Position anzuordnen, wenn der zumindest eine Elektromagnet (15) ein Signal von dem Steuersystem empfängt, und das zumindest eine Ventilelement (11) in der unteren Position anzuordnen, wenn der zumindest eine Elektromagnet (15) ein weiteres Signal von dem Steuersystem empfängt.

9. Werkzeugmaschine (1) nach einem der Ansprüche von 1 bis 7, **dadurch gekennzeichnet, dass** das zumindest eine Ventilelement (17) dafür ausgelegt ist, pneumatisch betätigt zu werden.

10. Werkzeugmaschine (1) nach Anspruch 9, **dadurch gekennzeichnet, dass** sie umfasst:
ein Druckluftsystem zur Bereitstellung von zumindest einem zu dem zumindest einen Ventilelement (17) geleiteten Druckluftstrom, wobei das Druckluftsystem mit dem zumindest einen Ventilelement (17) verbunden ist; und
zumindest ein Ventil, das operativ zwischen dem zumindest einen Ventilelement (17) und dem Druckluftsystem angeordnet ist, um, beim Gebrauch, den vom Druckluftsystem zu dem zumindest einen Ventilelement (17) geleiteten zumindest einen Druckluftstrom selektiv zu unterbrechen.

## Revendications

1. Machine-outil (1) comprenant un système pour arrêter des pièces à usiner, ledit système comprenant :
un support (6), qui est essentiellement plat, pour supporter au moins une pièce à usiner, au moins une ouverture (9) étant formée dans ledit support (6), au moins une chambre (10) étant prévue en dessous de ladite au moins une ouverture (9) ; un système de génération de dépression qui est relié à ladite au moins une chambre (10) pour générer une dépression dans ladite au moins une chambre (10) ;
au moins un élément de vanne (11, 17) qui est placé en dessous de ladite au moins une ouverture (9), ledit au moins un élément de vanne (11, 17) étant mobile entre une position haute, où ledit au moins un élément de vanne (11, 17) ferme ladite au moins une ouverture (9) et empêche, en utilisation, ladite dépression dans ladite au moins une chambre (10) de traverser ladite au moins une ouverture (9), et une position basse, où ladite au moins une ouverture (9) est maintenue au moins partiellement ouverte par ledit au moins un élément de vanne (11, 17) et ladite dépression se propage, en utilisation, de ladite au moins une chambre (10) à ladite au moins une ouverture (9) ; et
un système de commande, qui est relié audit au moins un élément de vanne (11, 17), pour commander le mouvement dudit au moins un élément de vanne (11, 17) entre ladite position haute et ladite position basse, de manière à ce que ladite au moins une pièce à usiner s'arrête en raison de l'attraction exercée par ladite dépression sur ladite au moins une pièce à usiner vers ledit support (6) lorsque ladite au moins une pièce à usiner est placée, en utilisation, sur ledit support (6) et ledit système de commande commande audit au moins un élément de vanne (11, 17) de se placer dans ladite position basse.

2. Machine-outil (1) selon la revendication 1, **caractérisée en ce que** ledit système de commande est automatique ou semi-automatique.

3. Machine-outil (1) selon la revendication 1 ou 2, **caractérisée en ce que** ladite au moins une chambre (10) est en communication avec au moins deux ouvertures (9).

4. Machine-outil (1) selon l'une quelconque des revendications précédentes, **caractérisée en ce que** ledit au moins un élément de vanne (11, 17) comprend un cylindre et un piston (13, 19) qui est mobile par rapport audit cylindre (12, 18).

5. Machine-outil (1) selon la revendication 4, **caractérisée en ce que** ledit piston (13, 19) est mobile selon une direction qui est essentiellement orthogonale audit support (6).

6. Machine-outil (1) selon la revendication 4 ou 5, **caractérisée en ce que** ledit au moins un élément de vanne (11, 17) comprend des moyens élastiques (14, 20) qui sont placés entre ledit piston (13, 19) et ledit cylindre (12, 18).

7. Machine-outil (1) selon l'une quelconque des revendications de 4 à 6, **caractérisée en ce que** ledit au moins un élément de vanne (11, 17) comprend au moins un élément d'étanchéité (16, 21) qui est placé dans une région essentiellement supérieure dudit piston (13, 19) pour permettre audit au moins un élément de vanne (11, 17) d'assurer une étanchéité avec ladite au moins une ouverture (9) lorsque ledit au moins un élément de vanne (11, 17) est dans ladite position haute.

8. Machine-outil (1) selon l'une quelconque des revendications précédentes, **caractérisée en ce que** ledit système pour arrêter les pièces à usiner comprend au moins un électroaimant (15) associé audit au moins un élément de vanne (11), où ledit au moins un électroaimant (15) est relié audit système de commande et est configuré pour placer ledit au moins un élément de vanne (11) dans ladite position haute lorsque ledit au moins un électroaimant (15) reçoit un signal dudit système de commande, et pour placer ledit au moins un élément de vanne (11) dans ladite position basse lorsque ledit au moins un électroaimant (15) reçoit un autre signal dudit système de commande.

9. Machine-outil (1) selon l'une quelconque des revendications de 1 à 7, **caractérisée en ce que** ledit au moins un élément de vanne (17) est configuré pour être actionné pneumatiquement.

10. Machine-outil (1) selon la revendication 9, **caractérisée en ce qu'**elle comprend :
un système d'air comprimé pour fournir au moins un flux d'air comprimé dirigé vers ledit au moins un élément de vanne (17), ledit système d'air comprimé étant relié audit au moins un élément de vanne(17) ; et
au moins une vanne opérationnellement placée entre ledit au moins un élément de vanne (17) et ledit système d'air comprimé pour interrompre sélectivement, lors de l'utilisation, au moins un flux d'air comprimé qui est dirigé dudit système d'air comprimé vers ledit au moins un élément de vanne (17).
